# EUROPEAN PATENT APPLICATION

(11) **EP 2 530 016 A2**
(43) Date of publication of application: **05.12.2012**
(21) Application number: 12170301.1
(22) Date of filing: 31.05.2012
(51) Int. Cl.: B64D 29/00

(54) **Aircraft engine cowl and process therefor**

(30) Priority: 31.05.2011 US 201113149039
(71) Applicant: MRA Systems, Inc., Baltimore, MD 21220 (US)
(72) Inventor: Scarr, Antony Brett, Baltimore, MD Maryland 21220 (US)
(74) Representative: Williams, Andrew Richard

(57) **Abstract**

A cowl (136) for an aircraft engine (10), and processes for producing the cowl (136) to have a layered construction and a high temperature capability. The layered construction of the cowl (136) includes a core member (144) having a cellular construction comprising internal hollow cells (148), and first and second skins (140,142) brazed to edges (152) of the cells (148) at opposite surfaces of the core member (144). The first and second skins (140,142) and the core member (144) are formed of titanium alloys, the first and second skins (140,142) are brazed to the core member (144), and the layered construction of the cowl (136) lacks a thermal insulation capable of thermally protecting the second skin (142) and brazed joints (150) that attach the second skin (142) to cell wall edges (152) at the second surface of the core member (144).

## Description

### BACKGROUND OF THE INVENTION

The present invention generally relates to cowls of types used in aircraft engines. More particularly, the invention relates to a construction for a cowl that is suitable for use as a core cowl surrounding the core module of a high bypass turbo-fan engine, and exhibits a high temperature capability without the thermal protection of an insulation material.

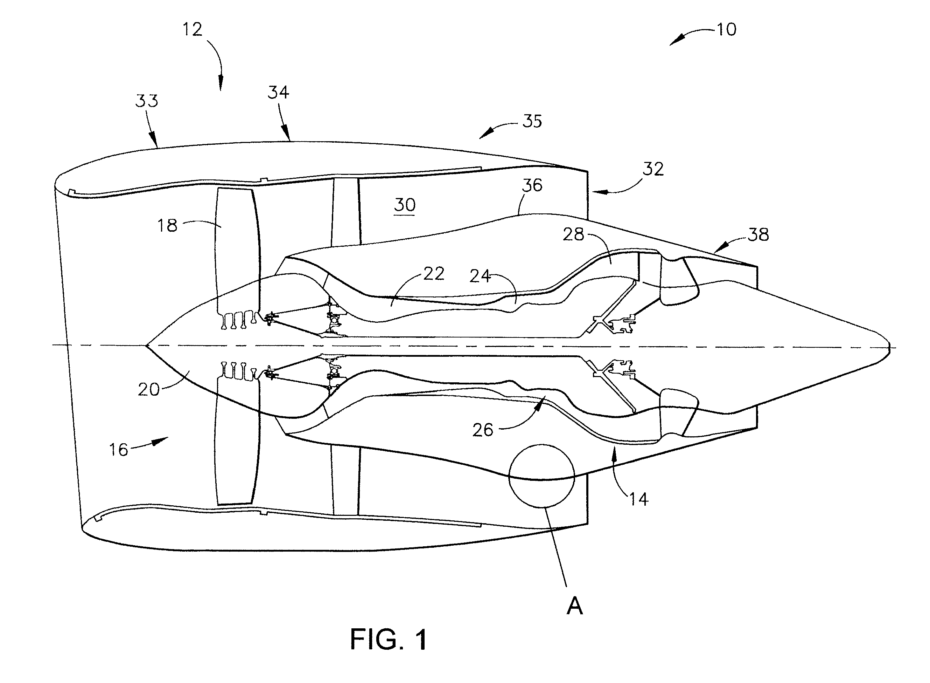

FIG. 1 schematically represents a high-bypass turbofan engine 10 of a type known in the art. The engine 10 is schematically represented as including a nacelle 12 and a core engine module 14. A fan assembly 16 located in front of the core module 14 includes a spinner nose 20 projecting forwardly from an array of fan blades 18. Both the spinner nose 20 and fan blades 18 are supported by a fan disc (not shown). The core module 14 is represented as including a high-pressure compressor 22, a combustor 24, a high-pressure turbine 26 and a low-pressure turbine 28. A large portion of the air that enters the fan assembly 16 is bypassed to the rear of the engine 10 to generate additional engine thrust. The bypassed air passes through an annular-shaped bypass duct 30 and exits the duct 30 through a fan nozzle 32. The nacelle 12 is composed of three primary elements that define the external boundaries of the nacelle 12: an inlet assembly 33, a fan cowl 34 located aft of the inlet assembly 33, and a thrust reverser 35 located aft of the fan cowl 34. The fan cowl 34 surrounds the fan blades 18. The thrust reverser 35 is composed of two primary components: a translating outer sleeve (not shown) and an inner core cowl 36. The fan duct flow surfaces of the translating cowl and the core cowl 36 exhaust the fan air at a fan exit nozzle 32. The core cowl 36 defines the radially inward boundary of the bypass duct 30, and provides an aft core cowl transition surface to the primary exhaust nozzle 38 that extends aftward from the core module 14.

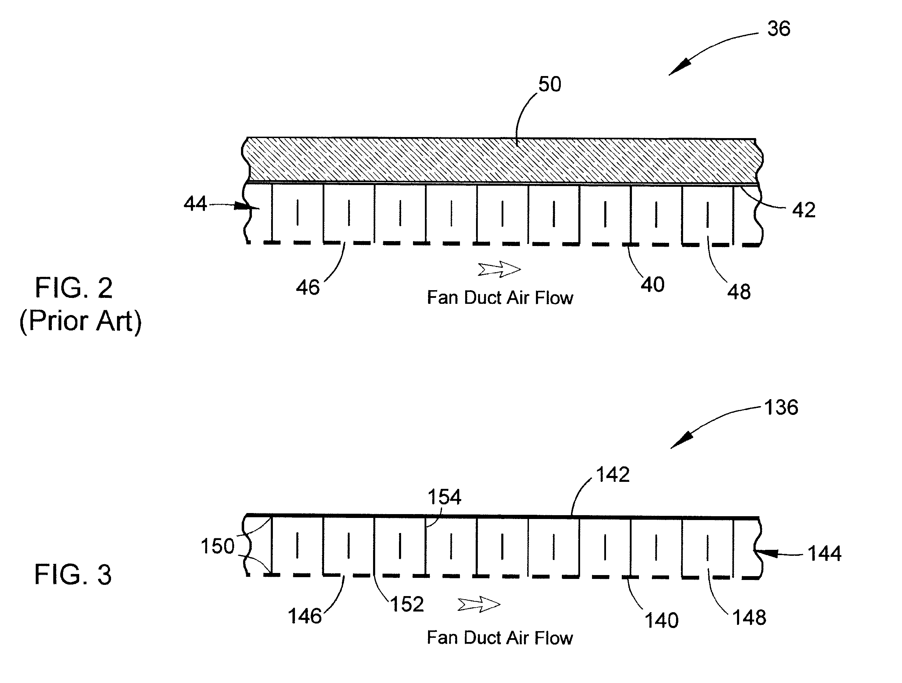

The core cowl 36 provides many functions, including but not limited to the aerodynamic contour for the airflow through the fan bypass duct 30, acoustic suppression, fire containment for the engine core 14, and engine pneumatic systems failure containment (burst duct). Core cowls of high bypass gas turbine engines have typically been constructed to have an aluminum skin or a fiber-reinforced composite skin adhesively bonded to an aluminum or pitch core. An example is schematically represented in FIG. 2, which is indicated to be a detailed cross-sectional view of a region "A" in FIG. 1. The construction of the cowl 36 is represented as comprising a pair of skins 40 and 42 bonded to opposite sides of a relatively thicker core 44. The core 44 is represented as having a honeycomb construction containing continuous hexagonal-shaped cells 48 that pass entirely through the thickness of the core 44, though other lightweight cellular-type constructions are also known and used for cowl cores. Because the cells 48 pass entirely through the core 44, the honeycomb core 44 can be described as having an open-cell or otherwise porous construction, whereas other core constructions generally have closed-cell or otherwise nonporous constructions. The core cell walls provide a thermally conductive path from the engine side to the fan duct side of the inner wall.

As evident from FIGS. 1 and 2, the skin 40 faces the bypass duct 30 to define a radially inward boundary of the airflow through the duct 30. The skin 40 is represented as an acoustic skin 40, in that it has been acoustically treated by forming numerous small through-holes 46 that help to suppress noise by channeling pressure waves associated with sound into the cells 48 within the core 44, where the energy of the waves is dissipated through friction (conversion to heat), pressure losses, and cancellation by reflection of the waves from the other skin 42, referred to herein as the backing skin 42.

The construction represented in FIG. 2 is fairly typical of the type of sandwich-type layered structures used in core cowls of high bypass gas turbine engines, as well as other aircraft engine nacelle components, for example, engine inlet, thrust reversers and transcowls. The layered construction of the core cowl 36 enables it to sustain significant structural loading and minimizes structural deformation under load. Regardless of whether the core cowl 36 has a metallic or composite construction, a thermal insulation blanket 50 is provided on the backing skin 42 to protect the adhesive bonds between the core 44 and the skins 40 and 42 by limiting the temperatures to which these bonds are subjected during engine operation. Typical materials and constructions for the thermal insulation blanket 50 include a metallic foil and/or Kapton facing that surrounds a ceramic fiber fill or spray-on insulation materials. The potential for hot air leakage between the insulation blanket 50 and the remainder of the core cowl 36 can create a hazard if the bond line temperatures are exceeded. As operating temperatures have increased with newer engine designs, the increasingly severe thermal environments of their core cowls have necessitated thicker and heavier insulation blankets 50, which are disadvantageous in terms of weight (fuel economy), clearance with surrounding components of the engine core 14, and inspection and maintenance of the core cowl 36.

### BRIEF DESCRIPTION OF THE INVENTION

The present invention provides a cowl for an aircraft engine, and processes for producing the cowl to have a layered construction and a high temperature capability.

According to a first aspect of the invention, the layered construction of the cowl includes a core member having oppositely-disposed first and second surfaces and a cellular construction comprising internal hollow cells that define cell wall edges at the first and second surface, and first and second skins attached to the cell wall edges at the first and second surfaces, respectively, of the core member so that the core member is between the first and second skins. The first skin is preferably an acoustically treated skin having through-holes adapted to suppress noise by channeling pressure waves associated with sound into the internal hollow cells within the core member. According to preferred aspects of the invention, the first and second skins and the core member are formed of titanium alloys, the first and second skins are brazed to the core member to define brazed joints that attach the first and second skins to the cell wall edges at the first and second surfaces of the core member, and the layered construction of the cowl lacks a thermal insulation capable of thermally protecting the second skin and the brazed joints that attach the second skin to the cell wall edges at the second surface of the core member.

According to a second aspect of the invention, an engine core cowl is installed on a high-bypass gas turbine engine and surrounds a compressor, combustor and/or turbine section of a core module of the gas turbine engine. The cowl has a layered construction that includes a core member having oppositely-disposed first and second surfaces and a cellular construction comprising internal hollow cells that define cell wall edges at the first and second surface, and an acoustic skin and a backing skin attached to the cell wall edges at the first and second surfaces, respectively, of the core member so that the core member is between the acoustic and backing skins. The acoustic and backing skins have thicknesses of about 0.30 to about 1.8 millimeters, the acoustic skin is acoustically treated to have through-holes adapted to suppress noise by channeling pressure waves associated with sound into the internal hollow cells within the core member, and the backing skin is not perforated to have through-holes. According to preferred aspects of the invention, the acoustic skin, the backing skin and the core member are formed of titanium alloys, the acoustic and backing skins are brazed to the core member to define brazed joints that attach the acoustic and backing skins to the cell wall edges of the core member, and the core module lacks a thermal insulation capable of thermally protecting the backing skin and the brazed joints that attach the backing skin to the cell wall edges at the second surface of the core member.

According to another aspect of the invention, a process is provided for fabricating a cowl of an aircraft engine to have a layered construction. The process includes providing a core member formed of a titanium alloy to have oppositely-disposed first and second surfaces and a cellular construction comprising internal hollow cells that define cell wall edges at the first and second surface. First and second skins are then brazed to the cell wall edges at the first and second surfaces, respectively, of the core member so that the core member is between the first and second skins. The first skin is an acoustic skin acoustically treated to have through-holes adapted to suppress noise by channeling pressure waves associated with sound into the internal hollow cells within the core. The first and second skins are formed of titanium alloys and are brazed to the core member with a braze alloy. The cowl is then installed on a core module of the aircraft engine such that the layered construction of the cowl lacks a thermal insulation capable of thermally protecting the second skin and brazed joints that attach the second skin to the cell wall edges at the second surface of the core member, the first skin defines a boundary of a bypass duct of the aircraft engine, and the second skin is exposed to core module compartment air temperatures during operation of the core module.

A beneficial effect of the invention is the ability to eliminate any need for a conventional thermal insulation, such as a thermal insulation blanket or a sprayed-on insulation that protects the second/backing skin and its attachment to the core member from the high temperatures attributable to the core module operation, and particularly the combustor and turbine sections of the engine. For applications where temperature control requirements would necessitate the use of excessive thermal insulation, the elimination of the need for thermal insulation allows for a reduction in engine weight, improved durability, and improved system reliability. The absence of an insulation blanket also facilitates periodic inspection and maintenance operations performed on the cowl , and therefore reduces maintenance costs over the life of the cowl.

Additional potential benefits resulting from the elimination of thermal insulation include the ability of a core cowl to more closely surround the core module, thereby reducing the diameter and surface area of the core cowl. This in turn allows the diameter and surface area of the nacelle surrounding the core module to be reduced, which has the benefit of reduced aerodynamic drag and overall nacelle weight. The elimination of thermal insulation also avoids the need to design and install thermal insulation around access doors and other internally-mounted structures, which reduces part count. The brazed titanium structure of the cowl also provides improved tolerance to damage from various causes, including dropped tools, handling, etc

The high temperature capability of the cowl permits its construction to be extended and integrated as part of the primary nozzle of an engine, leading to further weight and performance benefits. It is also feasible to integrate compartment cooling inlet scoops and exhaust features for ventilation, engine bleed air, precoolers, etc., into the cowl by means of welding or brazing, as opposed to mechanical attachment and sealing techniques typically required by prior art constructions, which can also lead to weight and performance benefits.

Other aspects and advantages of this invention will be better appreciated from the following detailed description.

### BRIEF DESCRIPTION OF THE DRAWINGS

FIG. 1 schematically represents a cross-sectional view of a high-bypass turbofan engine.
FIG. 2 schematically represents a cross-section of a conventional core cowl used in high-bypass gas turbine engines.
FIG. 3 schematically represents a cross-section of a core cowl constructed in accordance with an embodiment of this invention.

### DETAILED DESCRIPTION OF THE INVENTION

FIG. 3 represents a cross-section of a core cowl 136 suitable for use in a high-bypass gas turbine engine, for example, of the type represented in FIG. 1. The cowl 136 represented in FIG. 3 can be installed in place of the core cowl 36 of FIG. 2, and therefore is particularly adapted to surround the core module 14 and define the inner boundary of the bypass duct 30 of the engine 10 represented in FIG. 1.

Similar to the prior art cowl 36 of FIG. 2, the cowl 136 represented in FIG. 3 has a layered construction that comprises skins 140 and 142 attached to a core member 144. The cowl 136 is intended to be installed so that the skin 140 faces the airflow through the bypass duct 30 of the engine 10, and for this purpose the skin 140 is fabricated as an acoustic skin 140 having a well-defined pattern of small and preferably equi-spaced perforations or holes 146 that satisfy application-specific acoustic characteristics. The holes 146 extend entirely through the acoustic skin 140, which may have a wide range of thickness. A typical thickness is about 0.012 to about 0.072 inch (about 0.30 to about 1.8 mm), though lesser and greater thicknesses are foreseeable. In contrast, the skin 142 is intended to serve as a backing skin 142 that faces radially inward toward the interior of the core module 14. The backing skin 142 may also have a wide range of thickness, with typical thicknesses again being about 0.012 to about 0.072 inch (about 0.30 to about 1.8 mm), though lesser and greater thicknesses are again foreseeable. The shapes of the skins 140 and 142 can be tailored by hot forming or super-plastic forming techniques, and the thicknesses of the skins 140 and 142 can be achieved by machined milling or chemical milling processes to meet the structural loading and stiffness requirements of the skins 140 and 142 and the cowl 140 as a whole.

As with the acoustic skin 40 of FIG. 2, the acoustic skin 140 of FIG. 3 is intended to suppress noise by channeling pressure waves associated with sound into internal hollow cells 148 within the core member 144, where the energy of the waves is dissipated through friction (conversion to heat), pressure losses, and cancellation by reflection of the waves from the backing skin 42. The backing skin 142 does not have any through-holes of the type shown for the acoustic skin 140. The cells 148 within the core member 144 are represented as being of an open-cell type, for example, hexagonal-shaped cells associated with honeycomb constructions often used for core members of aircraft engine cowls. The open-cell construction of the core member 144 results in its oppositely-disposed surfaces being defined by the edges 152 of walls 154 that define the cells 148. As such, the skins 140 and 142 are attached to the edges 152 of the cell walls 154.

The acoustic and backing skins 140 and 142 are attached to the core member 144 to yield a unitary structure that can withstand the loading that typically occurs with aircraft engine nacelles. In contrast to the cowl 36 represented in FIG. 2, the skins 140 and 142 and the core member 144 are not formed of conventional materials typically found in aircraft engine nacelle construction, for example, aluminum alloys and fiber-reinforced polymer composites. Instead, the skins 140 and 142 and core member 144 are formed of titanium alloys capable of being brazed to each other, and the brazing process yields braze joints 150 represented in FIG. 3 as joining the skins 140 and 142 to the core member 144.

To promote the rigidity of the layered construction of the cowl 136, the core member 144 preferably has a thickness of about 0.5 to about 2 inches (about 10 to about 50 mm), though lesser and greater thicknesses are also possible. The shear load-carrying capability and density of the core member 144, which relates to the cross-sectional area of the cells 148 and the thickness of the cell walls 154, can be tailored to satisfy the load and deflection criteria for a specific application. The size of the cells 148 can be tailored to achieve acoustic objectives, with a typical cell size being about 0.375 inch (about 9 mm), though lesser and greater cell sizes are also possible.

A notable aspect of the cowl 136 represented in FIG. 3 is the absence of any thermal insulation blanket, for example, of the type represented in FIG. 2. According to a preferred aspect of the invention, by fabricating the layered construction of the cowl 136 from titanium alloys with the use of the brazing technology described above, the high-temperature capability of the cowl 136 is extended to the extent that a thermal insulation blanket is not necessary to reduce the temperatures of the braze joints 150 that metallurgically join the skins 140 and 142 to the core member 144. In particular, the braze joints 150 produced by the brazing process are preferably capable of withstanding temperatures of about 350°F to about 650°F (about 175°C to about 350°C), which roughly corresponds to the core module compartment air temperature to which the backing skin 142 is exposed in the absence of any thermal insulation material within the construction of the cowl 136. It should be noted that the brazed construction is capable of sustaining temperatures in excess of this temperature range, potentially up to about 1200°F (about 650°C) should the environment require it. This capability allows the cowl 136 to be installed to surround the combustor and turbine sections of a core module (corresponding to the combustor 24, high-pressure turbine 26 and low-pressure turbine 28 of the core module 14 of FIG. 1) without any intervening thermal insulation blanket. In contrast, the cowl 36 of FIG. 2, constructed of such conventional materials as aluminum alloys or polymer composite materials, is typically limited to maximum temperatures of about 300°F (about 150°C) due to the susceptibility of its skin and core bond lines to mechanical property degradation at higher temperatures.

While the invention has been described in terms of specific embodiments, it is apparent that other forms could be adopted by one skilled in the art. For example, the physical configuration of the cowl 136 could differ from that shown in FIG. 3, and processes other than those noted could be used to fabricate the cowl 136. Therefore, the scope of the invention is to be limited only by the following claims.

Various aspects and embodiments of the invention are indicated in the following clauses:
1. A cowl of an aircraft engine, the cowl having a layered construction comprising:
   a core member having oppositely-disposed first and second surfaces and a cellular construction comprising internal hollow cells that define cell wall edges at the first and second surface; and
   first and second skins attached to the cell wall edges at the first and second surfaces, respectively, of the core member so that the core member is between the first and second skins, the first skin being an acoustic skin acoustically treated to have through-holes adapted to suppress noise by channeling pressure waves associated with sound into the internal hollow cells within the core member;
   wherein the first and second skins and the core member are formed of titanium alloys, the first and second skins are brazed to the core member to define brazed joints that attach the first and second skins to the cell wall edges at the first and second surfaces of the core member, and the layered construction of the cowl lacks a thermal insulation capable of thermally protecting the second skin and the brazed joints that attach the second skin to the cell wall edges at the second surface of the core member.
2. The cowl according to clause 1, wherein the first skin has a thickness of about 0.30 to about 1.8 millimeters and the first skin is tailored to shape by hot forming or super-plastic forming and to the thickness by a machined milling or chemical milling process.
3. The cowl according to clause 1, wherein the second skin has a thickness of about 0.30 to about 1.8 millimeters and the second skin is tailored to shape by hot forming or super-plastic forming and to the thickness by a machined milling or chemical milling process.
4. The cowl according to clause 1, wherein the second skin is not perforated to have through-holes.
5. The cowl according to clause 1, wherein the core member is a honeycomb structure and the internal hollow cells have hexagonal cross-sections.
6. The cowl according to clause 1, wherein the aircraft engine is a high-bypass gas turbine engine, and the cowl is installed on a core module of the aircraft engine.
7. The cowl according to clause 6, wherein the cowl is installed so that the first skin defines a boundary of a bypass duct of the aircraft engine.
8. The cowl according to clause 6, wherein the cowl lacks a thermal insulation blanket between the second skin and combustor and turbine sections of the core module.
9. The cowl according to clause 6, wherein the second skin is exposed to a temperature of at least 175°C during operation of the core module.
10. The cowl according to clause 6, wherein the second skin is exposed to temperatures of up to about 650°C during operation of the core module.
11. An engine core cowl surrounding a compressor, combustor and/or turbine section of a core module of a high-bypass gas turbine engine, the cowl having a layered construction comprising:
   a core member having oppositely-disposed first and second surfaces and a cellular construction comprising internal hollow cells that define cell wall edges at the first and second surface; and
   an acoustic skin and a backing skin attached to the cell wall edges at the first and second surfaces, respectively, of the core member so that the core member is between the acoustic and backing skins, the acoustic and backing skins having thicknesses of about 0.30 to about 1.8 millimeters, the acoustic skin being acoustically treated to have through-holes adapted to suppress noise by channeling pressure waves associated with sound into the internal hollow cells within the core member, the backing skin not being perforated to have through-holes;
   wherein the acoustic skin, the backing skin and the core member are formed of titanium alloys, the acoustic and backing skins are brazed to the core member to define brazed joints that attach the acoustic and backing skins to the cell wall edges of the core member, and the core module lacks a thermal insulation capable of thermally protecting the backing skin and the brazed joints that attach the backing skin to the cell wall edges at the second surface of the core member.
12. The engine core cowl according to clause 11, wherein the acoustic skin defines a boundary of a bypass duct of the gas turbine engine.
13. The engine core cowl according to clause 11, wherein the backing skin is exposed to a temperature of at least 175°C during operation of the core module.
14. A process of fabricating a cowl of an aircraft engine to have a layered construction, the process comprising:
   providing a core member formed of a titanium alloy to have oppositely-disposed first and second surfaces and a cellular construction comprising internal hollow cells that define cell wall edges at the first and second surface;
   brazing first and second skins to the cell wall edges at the first and second surfaces, respectively, of the core member so that the core member is between the first and second skins, the first skin being an acoustic skin acoustically treated to have through-holes adapted to suppress noise by channeling pressure waves associated with sound into the internal hollow cells within the core, the first and second skins being formed of titanium alloys and being brazed to the core member with a braze alloy; and
   installing the cowl on a core module of the aircraft engine such that the layered construction of the cowl lacks a thermal insulation capable of thermally protecting the second skin and brazed joints that attach the second skin to the cell wall edges at the second surface of the core member, the first skin defines a boundary of a bypass duct of the aircraft engine, and the second skin is exposed to temperatures of at least 175°C during operation of the core module.
15. The process according to clause 14, wherein the second skin is exposed to temperatures of up to about 350°C during operation of the core module.

## Claims

1. A cowl (136) of an aircraft engine (10), the cowl (136) having a layered construction comprising a core member (144) having oppositely-disposed first and second surfaces and first and second skins (140,142) attached to the first and second surfaces, respectively, of the core member (144) so that the core member (144) is between the first and second skins (140,142), the core member (144) having a cellular construction comprising internal hollow cells (148) that define cell wall edges (152) at the first and second surface, the first and second skins (140,142) being attached to the cell wall edges (152) at the first and second surfaces, respectively, of the core member (144), the first skin (140) being an acoustic skin (140) acoustically treated to have through-holes (146) adapted to suppress noise by channeling pressure waves associated with sound into the internal hollow cells (148) within the core member (144), **characterized in that**:
the first and second skins (140,142) and the core member (144) are formed of titanium alloys, the first and second skins (140,142) are brazed to the core member (144) to define brazed joints (150) that attach the first and second skins (140,142) to the cell wall edges (152) at the first and second surfaces of the core member (144), and the layered construction of the cowl (136) lacks a thermal insulation capable of thermally protecting the second skin (142) and the brazed joints (150) that attach the second skin (142) to the cell wall edges (152) at the second surface of the core member (144).

2. The cowl (136) according to claim 1, wherein the first skin (140) has a thickness of about 0.30 to about 1.8 millimeters and the first skin (140) is tailored to shape by hot forming or super-plastic forming and to the thickness by a machined milling or chemical milling process.

3. The cowl (136) according to claim 1 or 2, wherein the second skin (142) has a thickness of about 0.30 to about 1.8 millimeters and the second skin (142) is tailored to shape by hot forming or super-plastic forming and to the thickness by a machined milling or chemical milling process.

4. The cowl (136) according to any one of claims 1 to 3, wherein the core member (144) is a honeycomb structure and the internal hollow cells (148) have hexagonal cross-sections.

5. The cowl (136) according to any one of claims 1 to 4, wherein the aircraft engine (10) is a high-bypass gas turbine engine (10), and the cowl (136) is installed on a core module (14) of the aircraft engine (10) and surrounds one or more of a compressor, a combustor and a turbine section (22,24,26,28) of the core module (14).

6. The cowl (136) according to claim 5, wherein the cowl (136) is installed so that the first skin (140) defines a boundary of a bypass duct (30) of the aircraft engine (10).

7. The cowl (136) according to claim 5 or 6, wherein the cowl (136) lacks a thermal insulation blanket between the second skin (142) and combustor and turbine sections (24,26,28) of the core module (14).

8. The cowl (136) according any one of claims 5 to 7, wherein the second skin (142) is exposed to a temperature of at least 175°C during operation of the core module (14).

9. The cowl (136) according to any one of claims 5 to 8, wherein the second skin (142) is exposed to temperatures of up to about 650°C during operation of the core module (14).

10. A process of fabricating a cowl (136) of an aircraft engine (10) to have a layered construction, **characterized by**:
providing a core member (144) formed of a titanium alloy to have oppositely-disposed first and second surfaces and a cellular construction comprising internal hollow cells (148) that define cell wall edges (152) at the first and second surface;
brazing first and second skins (140,142) to the cell wall edges (152) at the first and second surfaces, respectively, of the core member (144) so that the core member (144) is between the first and second skins (140,142), the first skin (140) being an acoustic skin (140) acoustically treated to have through-holes (146) adapted to suppress noise by channeling pressure waves associated with sound into the internal hollow cells (148) within the core, the first and second skins (140,142) being formed of titanium alloys and being brazed to the core member (144) with a braze alloy; and
installing the cowl (136) on a core engine (14) of the aircraft engine (10) such that the layered construction of the cowl (136) lacks a thermal insulation capable of thermally protecting the second skin (142) and brazed joints (150) that attach the second skin (142) to the cell wall edges (152) at the second surface of the core member (144), the first skin (140) defines a boundary of a bypass duct (30) of the aircraft engine (10), and the second skin (142) is exposed to temperatures of at least 175°C during operation of the core engine (14).
